Europäisches Patentamt

European Patent Office

Office européen des brevets

(19)

(11) **EP 1 209 512 A1**

(12) **DEMANDE DE BREVET EUROPEEN**

(43) Date de publication:
**29.05.2002 Bulletin 2002/22**

(51) Int Cl.[7]: **G02F 1/1335**, G02F 1/1343,
G02F 1/137, G02F 1/1334

(21) Numéro de dépôt: **00204224.0**

(22) Date de dépôt: **27.11.2000**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **ASULAB S.A.**
**CH-2501 Bienne (CH)**

(72) Inventeur: **Grupp, Joachim**
**2073 Enges (CH)**

(74) Mandataire: **Ravenel, Thierry Gérard Louis et al I C B,**
**Ingénieurs Conseils en Brevets SA,**
**7, rue des Sors**
**2074 Marin (CH)**

Remarques:
Une requête en rectification fig.4. a été présentée conformément à la règle 88 CBE. Il est statué sur cette requête au cours de la procédure engagée devant la division d'examen (Directives relatives à l'examen pratiqué à l'OEB, A-V, 3.).

(54) **Dispositif d'affichage réflectif à cristaux liquides présentant un contraste d'affichage amélioré**

(57)    La présente invention concerne un dispositif d'affichage (1) à cristaux liquides comprenant un substrat (2) disposé sur un côté avant, c'est-à-dire disposé du côté recevant une lumière incidente, et un deuxième substrat (4) disposé sur un côté arrière, de sorte que ce deuxième substrat (4) s'étend en regard du substrat avant (2) parallèlement à ce dernier, les premier et second substrats (2, 4) étant reliés par l'intermédiaire d'un cadre de scellement (6) afin de délimiter entre eux une cavité pour le confinement des cristaux liquides (8) et comportant sur leurs faces en regard un premier et un second groupes d'électrodes (10, 12) respectivement, le dispositif d'affichage (1) étant connecté à un circuit de commande des électrodes (10, 12), ce circuit pouvant fournir des tensions de commande appropriées à des électrodes sélectionnées pour modifier les conditions optiques du cristal liquide (8) au point de croisement des électrodes considérées, c'est-à-dire commuter le cristal liquide (8) dans un état où il est réfléchissant ou dans un état où il est transparent, ledit dispositif d'affichage (1) comprenant en outre une couche absorbante noire (14), caractérisé en ce que la couche absorbante (14) est disposée au même niveau ou à un niveau plus élevé dans l'ordre d'empilement des substrats (2, 4) que la face du substrat arrière qui porte les électrodes.

Fig. 2

EP 1 209 512 A1

## Description

La présente invention a pour objet un dispositif d'affichage réflectif à cristaux liquides présentant notamment un contraste d'affichage amélioré permettant aux caractères affichés de bien se détacher du fond sur lequel ils s'affichent.

Il existe différents types de dispositifs d'affichage réflectifs à cristaux liquides. On peut notamment citer les dispositifs d'affichage transmissifs comprenant un réflecteur métallique ou diélectrique placé derrière la cellule d'affichage.

Un dispositif d'affichage transmissif comporte classiquement un polariseur absorbant placé devant la cellule, et un second polariseur absorbant placé derrière la cellule et dont la direction de polarisation est perpendiculaire à celle du premier polariseur absorbant placé devant la cellule. Tel est le cas, notamment, des cellules à cristaux liquides nématiques en hélice, mieux connus sous leur dénomination anglo-saxonne "Twist Nematic" ou "TN". Une première composante linéaire de la lumière est absorbée par le polariseur absorbant placé devant la cellule, c'est-à-dire du côté recevant la lumière incidente, tandis que la seconde composante de la lumière, perpendiculaire à la première, est transmise à la cellule TN. Dans la cellule TN, la direction de polarisation de la lumière transmise est tournée de 90°, de sorte que cette lumière est transmise sans modification par le second polariseur absorbant, et est visible pour un observateur placé derrière la cellule. Dans les zones où l'on applique une tension de commande pour modifier les conditions optiques du cristal liquide Twist Nematic, la lumière transmise par la polariseur absorbant placé devant la cellule traverse ladite cellule sans être modifiée par le cristal liquide TN et est absorbée par le second polariseur absorbant placé derrière la cellule. L'observateur, placé derrière la cellule, voit donc des caractères s'afficher en noir sur fond blanc.

Pour transformer une cellule transmissive en cellule réflective, il suffit, comme mentionné ci-dessus, de disposer un réflecteur métallique ou diélectrique derrière ladite cellule transmissive. Ainsi, dans le cas où la cellule d'affichage est une cellule à cristaux liquides nématiques en hélice, la composante linéaire de la lumière transmise à la cellule TN par le polariseur absorbant placé devant ladite cellule est tournée de 90° par le cristal liquide, puis transmise sans modification par le second polariseur absorbant placé derrière la cellule TN dont la direction de polarisation est perpendiculaire à celle du premier polariseur absorbant, puis finalement réfléchie par le réflecteur. La lumière effectue ensuite le même trajet, mais en sens inverse, à travers la cellule et les polariseurs absorbants, et est visible pour un observateur placé devant ladite cellule, c'est-à-dire du côté par lequel la lumière incidente pénètre.

Il existe également des cellules à cristaux liquides réflectives dépourvues de polariseurs. C'est le cas, par exemple, des cellules à cristaux liquides à texture cholestérique éventuellement stabilisés par un polymère, mieux connus sous leur dénomination anglo-saxonne "Polymer Stabilized Cholesteric Texture" ou "PSCT".

On rappelle que la caractéristique de certains cristaux liquides de type cholestérique est de présenter une structure périodique en hélice qui réfléchit, par réflexion de Bragg, la lumière qui a la polarisation circulaire ayant le même sens de rotation que celui du cristal liquide. Ainsi, un cristal liquide cholestérique ayant un sens d'hélice à droite réfléchira la lumière polarisée circulairement à droite, tandis qu'il laissera passer sans modification la lumière polarisée circulairement à gauche. Inversement, un cristal cholestérique ayant un sens d'hélice à gauche réfléchira la lumière polarisée circulairement à gauche.

Les cellules d'affichage dépourvues de polariseurs qui utilisent des cristaux liquides réflectifs tels que des cristaux liquides cholestériques nécessitent l'emploi d'une couche absorbante noire classiquement déposée sur la face arrière de la cellule. Lorsqu'une tension de commande appropriée est fournie à des électrodes sélectionnées pour modifier les conditions optiques du cristal liquide situé au point de croisement des électrodes considérées, cette tension de commande commute le cristal liquide dans un état où il est réfléchissant ou dans un état où il est transparent. Dans l'état où il est réfléchissant, le cristal liquide cholestérique a un coefficient de réflexion sensiblement égal à 0,5 quand la lumière d'une polarisation est réfléchie, et quand la lumière de l'autre polarisation passe et est absorbée par la couche absorbante. Quand on applique la tension de commande, le cristal liquide commute dans l'état où il est transparent et laisse passer pratiquement toute la lumière qui est absorbée par la couche noire située sur la face arrière de la cellule. L'observateur situé du côté avant de la cellule, c'est-à-dire du côté par lequel la lumière incidente pénètre dans la cellule, voit donc un affichage sombre sur fond clair.

Le dépôt de la couche absorbante noire sur la face arrière des cellules réflectives pose des problèmes lors de la fabrication de ces cellules. En effet, comme cela est connu, les cellules à cristaux liquides sont le plus souvent fabriquées collectivement par lots. Ces lots comportent deux plaques communes à toutes les cellules et un réseau de matière de scellement liant les plaques et formant les cloisons desdites cellules, ces cloisons délimitant des cavités destinées à être remplies de cristal liquide. Chaque lot est divisé en bandes rectilignes par des techniques de rayage et de cassure du verre, ou par sciage suivant des droites parallèles. Chaque cellule ayant une ouverture de remplissage le long d'un bord de la bande, on remplit alors les cellules et on scelle leurs ouvertures, puis on divise la bande en cellules individuelles rectangulaires suivant des droites perpendiculaires aux précédentes. A ce stade, si le contour des cellules doit présenter des parties s'écartant de la forme rectangulaire, on façonne ces parties par meulage.

La couche absorbante noire est appliquée sur l'une des deux plaques communes à toutes les cellules avant que les lots de cellules ne soient divisés en cellules individuelles. Cette couche absorbante ne peut néanmoins couvrir toute la surface de la plaque correspondante, car elle serait détériorée et gênerait les opérations de coupe et de meulage. Cette étape de fabrication pourrait aussi être effectuée individuellement sur chaque cellule, mais cela rendrait la fabrication plus complexe et plus coûteuse que si elle pouvait être faite sur un lot de cellules. C'est pour ces raisons que la technique utilisée actuellement consiste à déposer sélectivement des couches absorbantes noires sur l'une des plaques communes en suivant, pour chaque cellule, le contour final de celle-ci. Cette solution, plus simple que s'il fallait déposer la couche absorbante individuellement sur chaque cellule, n'en reste pas moins complexe et nécessite une grande précision dans son exécution, ce qui renchérit inévitablement le prix de revient final des cellules.

Un autre problème récurrent rencontré avec les cellules réflectives a trait aux pertes optiques dues aux multiples réflexions de la lumière incidente à chaque interface entre deux matériaux d'indices optiques différents. Ce problème sera mieux compris à l'examen de la figure 1 annexée à la présente demande de brevet qui est une vue en coupe d'un dispositif d'affichage réflectif selon l'art antérieur.

Désigné dans son ensemble par la référence numérique générale 1, le dispositif d'affichage réflectif mentionné ci-dessus comporte un premier substrat transparent 2 disposé sur un côté avant, c'est-à-dire du côté qui reçoit une lumière incidente, et un deuxième substrat 4 disposé sur un côté arrière, de sorte que le substrat 4 s'étend en regard du substrat avant 2 et parallèlement à ce dernier.

Les substrats 2 et 4 peuvent être réalisés en verre ou en une matière plastique. Ils sont reliés par l'intermédiaire d'un cadre de scellement 6 afin de délimiter entre eux une cavité pour contenir un film ou couche 8 de cristaux liquides réflectifs, par exemple de type cholestérique.

La surface du substrat 2 tournée vers le substrat 4 porte un premier groupe d'électrodes 10. La surface du substrat 4 tournée vers le substrat 2 comprend un deuxième groupe d'électrodes 12 disposées, par exemple, sous forme de bandes perpendiculaires aux électrodes 10. Chacune des électrodes 10 et 12 peut être formée par une bande conductrice déposée et structurée par des techniques classiques et réalisée, par exemple, en oxyde d'étain-indium (ITO). Le dispositif d'affichage est connecté à un circuit de commande des électrodes 10 et 12, ce circuit fournissant des tensions de commande aux électrodes pour commuter le cristal liquide dans un état où il est réfléchissant ou dans un état où il est transparent. Enfin, la face extérieure du substrat arrière 4 est recouverte dune couche absorbante noire 14.

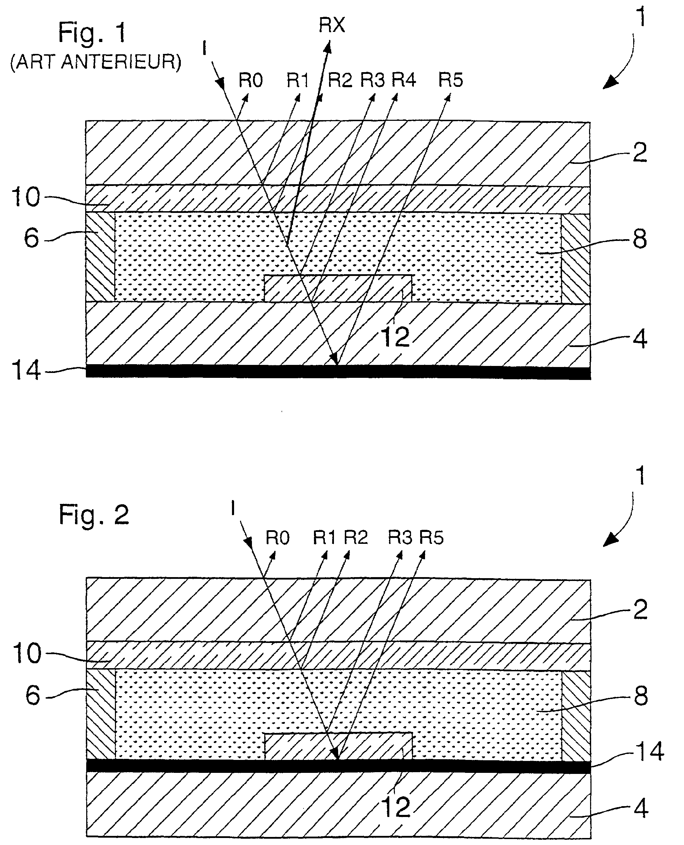

Comme on peut le voir sur la figure 1, la lumière incidente dont l'intensité est désignée par la référence alphabétique I est partiellement réfléchie à chaque interface entre deux milieux d'indices optiques différents. On désigne ainsi successivement par:

- R0 l'intensité de la lumière réfléchie par la surface extérieure du substrat avant 2;
- R1 l'intensité de la lumière réfléchie à l'interface entre la face arrière du substrat avant 2 et le premier groupe d'électrodes 10 déposé sur cette surface;
- R2 l'intensité de la lumière qui se réfléchit à l'interface entre le premier groupe d'électrodes 10 et la couche 8 de cristal liquide;
- R3 l'intensité de la lumière qui se réfléchit à l'interface entre la couche 8 de cristal liquide et le second groupe d'électrodes 12;
- R4 la quantité de lumière réfléchie à l'interface entre le second groupe d'électrodes 12 et la face avant du substrat arrière 4 sur laquelle ledit second groupe d'électrodes 12 est déposé, et par
- R5 la quantité de lumière réfléchie à l'interface entre la face arrière du substrat arrière 4 et la couche absorbante noire 14 déposée sur cette face arrière dudit second substrat.

Enfin, on désigne par Rx la quantité de lumière réfléchie par le cristal liquide cholestérique 8.

Pour donner un ordre de grandeur, et en négligeant les réflexions internes multiples, on estime que la réflexion d'intensité R0 représente environ 4% de l'intensité totale I de la lumière incidente, que les réflexions R1, R2, R3 et R4 représentent chacune approximativement de 1 à 2% de la quantité totale de lumière incidente I, et que R5 est de l'ordre de 1% de la lumière incidente I. On arrive donc, pour les réflexions R0 à R5, à un total de l'ordre de 10% de la quantité de lumière incidente I, ce qui est loin d'être négligeable et conduit à une altération de la luminosité des caractères affichés par le dispositif d'affichage 1.

Les réflexions R0, R1, R2, R3, R4 et R5 ont également pour effet de diminuer le contraste d'affichage CR. En effet, le contraste d'affichage CR se définit comme le rapport entre la réflectivité R du dispositif d'affichage 1 lorsque le cristal liquide 8 est commuté dans l'état où il réfléchit la lumière incidente, et la réflectivité r du dispositif d'affichage 1 lorsque le cristal liquide 8 est commuté dans l'état où il est sensiblement transparent. Or, la réflectivité R est la somme des réflexions R0 à R5 augmentée de la quantité de lumière Rx = RB réfléchie par le cristal liquide cholestérique 8 lorsque celui-ci est à l'état réfléchissant, et la réflectivité r est la somme des réflexions R0 à R5 augmentée de la quantité de lumière Rx = RS réfléchie par le cristal liquide cholestérique 8 lorsqu'il est dans l'état transparent où il laisse passer sensiblement toute la lumière. En conséquence, le contraste d'affichage CR est déterminé en première approximation par la relation suivante:

$$CR= \frac{R}{r} = \frac{RB+R0+R1+R2+R3+R4+R5}{RS+R0+R1+R2+R3+R4+R5}$$

Comme on le comprendra aisément, la valeur du contraste d'affichage CR est d'autant plus grande, et par conséquent les caractères affichés par le dispositif d'affichage 1 d'autant mieux contrastés, que la réflectivité r dudit dispositif d'affichage 1 à l'état sombre, c'est-à-dire dans l'état où le cristal liquide cholestérique 8 est pratiquement transparent et ne réfléchit que peu de lumière, est petit. En règle générale, on ne peut pas réduire de beaucoup la quantité de lumière RS réfléchie par le cristal liquide cholestérique 8 à l'état transparent. Par contre, on peut tenter de diminuer les réflexions R0 à R5 en disposant, à chaque interface entre deux milieux d'indices optiques différents, des couches anti-reflets. Cependant, ces couches anti-reflets sont le plus souvent très onéreuses et compliquent considérablement le processus de fabrication des cellules d'affichages. C'est pourquoi on renonce la plupart du temps à employer de telles couches anti-reflets et on accepte de mettre sur le marché des dispositifs d'affichage présentant un contraste d'affichage médiocre.

La présente invention a pour but principal de remédier aux inconvénients susmentionnés, ainsi qu'à d'autres encore en proposant un dispositif d'affichage réflectif à cristaux liquides permettant l'affichage de données contrastées qui soit plus simple, et donc moins coûteux à fabriquer.

A cet effet, selon un premier aspect, la présente invention concerne un dispositif d'affichage à cristaux liquides comprenant un substrat disposé sur un côté avant, c'est-à-dire disposé du côté recevant une lumière incidente, et un deuxième substrat disposé sur un côté arrière, de sorte que ce deuxième substrat s'étend en regard du substrat avant parallèlement à ce dernier, les premier et second substrats étant reliés par l'intermédiaire d'un cadre de scellement afin de délimiter entre eux une cavité pour le confinement des cristaux liquides et comportant sur leurs faces en regard un premier et un second groupes d'électrodes respectivement, le dispositif d'affichage étant connecté à un circuit de commande des électrodes, ce circuit pouvant fournir des tensions de commande appropriées à des électrodes sélectionnées pour modifier les conditions optiques du cristal liquide au point de croisement des électrodes considérées, c'est-à-dire commuter le cristal liquide dans un état où il est réfléchissant ou dans un état où il est transparent, ledit dispositif d'affichage comprenant en outre une couche absorbante noire réalisée dans un matériau électriquement non conducteur, caractérisé en ce que la couche absorbante est disposée au même niveau ou à un niveau plus élevé dans l'ordre d'empilement des substrats que la face du substrat arrière qui porte le second groupe d'électrodes.

Grâce à ces caractéristiques, la présente invention procure un dispositif d'affichage dans lequel la quantité de lumière réfléchie par réflexions paasites est diminuée, ce qui permet d'améliorer sensiblement le contraste d'affichage. D'autre part, on n'est plus obligé, afin de pouvoir ensuite rayer le verre lors de l'étape de découpe des cellules d'affichage, de déposer sélectivement la couche absorbante noire, ce qui simplifie les opérations de fabrication et contribue donc à une diminution du prix de revient.

Selon une caractéristique complémentaire de l'invention, le second groupe d'électrodes est réalisé en un matériau électriquement conducteur de couleur noire, et est associé à une couche absorbante également de couleur noire réalisée en un matériau électriquement non conducteur dont le coefficient de réflexion est proche ou égal à celui du matériau utilisé pour élaborer les électrodes, cette couche recouvrant au moins les parties non recouvertes par les électrodes.

De cette façon, dans les zones où le cristal liquide est commuté dans un même état transparent ou réfléchissant, la lumière va être absorbée ou réfléchie de façon quasi identique par la couche noire et par les électrodes, et donc procurer un affichage de couleur très homogène sur l'ensemble de la surface dudit dispositif d'affichage. On obtient en outre un contraste d'affichage optimum.

Plus précisément, en utilisant une électrode noire, on élimine les réflexions parasites qui se produisent habituellement à l'interface entre la couche de cristal liquide et le second groupe d'électrodes d'une part, et à l'interface entre ce même second groupe d'électrodes et la face avant du substrat arrière sur laquelle ledit second groupe d'électrodes est déposé. Ainsi, les électrodes ne se détacheront pas du reste de la surface d'affichage du dispositif selon l'invention, de sorte que ces électrodes seront totalement invisibles pour l'observateur. D'autre part, comme le second groupe d'électrodes joue à la fois le rôle d'électrode pour la fourniture de tensions de commande faisant commuter le cristal liquide d'un état réfléchissant à un état transparent et réciproquement, et le rôle de couche absorbante noire, l'étape de fabrication qui consiste à déposer sélectivement la couche absorbante noire après le dépôt et la structuration des électrodes ne requiert plus une grande précision, ce qui a, bien entendu, un impact favorable sur les coûts de fabrication des dispositifs d'affichage selon l'invention.

Selon un deuxième aspect, la présente invention concerne un dispositif d'affichage à cristaux liquides comprenant un substrat disposé sur un côté avant, c'est-à-dire du côté recevant une lumière incidente, et une couche disposée sur un côté arrière, de sorte que cette couche s'étend en regard du substrat avant parallèlement à ce dernier, le substrat avant et la couche portant sur leurs faces en regard un premier et un second groupe d'électrodes respectivement, un film formé par une pluralité de capsules de cristal liquide ou par un cristal liquide dispersé dans un polymère étant disposé entre ledit substrat avant et ladite couche, caractérisé en ce que la couche est une couche absorbante de couleur noire réalisée en un matériau électriquement non conducteur, et en ce que le second groupe d'électrodes est réalisé en un matériau électriquement conducteur également de couleur noire, le coefficient de réflexion du matériau utilisé pour élaborer la couche absorbante noire étant proche ou égal à celui du matériau utilisé pour élaborer les électrodes.

D'autres caractéristiques et avantages de la présente invention apparaîtront plus clairement à la lecture de la description détaillée qui suit de divers exemples de réalisation du dispositif d'affichage selon l'invention, ces exemples étant donnés à titre purement illustratif et non limitatif, en liaison avec les dessins annexés dans lesquels :

- la figure 1, déjà citée, est une vue en coupe d'un dispositif d'affichage de l'art antérieur dans lequel la couche absorbante noire réalisée en un matériau électriquement non conducteur est déposée sur la surface extérieure du substrat arrière;
- la figure 2 est une vue en coupe d'un dispositif d'affichage selon un premier aspect de l'invention dans lequel la couche absorbante noire réalisée en un matériau électriquement non conducteur est déposée entre le second groupe d'électrodes et le substrat arrière;
- la figure 3 est une vue en coupe d'un dispositif d'affichage selon l'invention dans lequel la couche absorbante noire réalisée en un matériau électriquement non conducteur est déposée sur le second groupe d'électrodes:
- la figure 4 est une vue en coupe d'un dispositif d'affichage selon l'invention dans lequel le second groupe d'électrodes porté par le substrat arrière est réalisé en un matériau électriquement conducteur de couleur noire et est associé à une couche absorbante noire qui recouvre les parties du substrat arrière non recouvertes par lesdites secondes électrodes et qui est réalisée en un matériau électriquement non conducteur dont le coefficient de réflexion est égal ou proche de celui du matériau utilisé pour structurer les électrodes;
- la figure 5 est une vue en coupe d'un dispositif d'affichage selon l'invention dans lequel le second groupe d'électrodes porté par le substrat arrière est réalisé en un matériau électriquement conducteur de couleur noire et est recouvert par une couche absorbante noire réalisée en un matériau électriquement non conducteur;
- la figure 6 est une vue en coupe d'un dispositif d'affichage selon l'invention dans lequel la couche absorbante noire réalisée en un matériau électriquement non conducteur est disposée entre le substrat arrière et le second groupe d'électrodes réalisé en un matériau électriquement conducteur de couleur noire;

- la figure 7 est une vue en coupe d'un dispositif d'affichage selon l'invention dans lequel la couche absorbante noire réalisée en un matériau électriquement non conducteur est faite d'une pièce avec le substrat arrière, et
- la figure 8 est une vue en coupe d'un dispositif d'affichage selon un deuxième aspect de l'invention dans lequel un film formé par une pluralité de capsules de cristal liquide ou par un cristal liquide dispersé dans un polymère est disposé entre un substrat avant et une couche absorbante noire réalisée en un matériau électriquement non conducteur.

La présente invention procède de l'idée générale consistant à déplacer, dans les dispositifs d'affichage à cristaux liquides réflectifs, la couche absorbante noire qui est habituellement déposée sur la face inférieure du substrat arrière, et à la disposer à un niveau plus élevé que le niveau dudit substrat arrière. De cette façon, on réduit le nombre de réflexions parasites de la lumière incidente au niveau des interfaces entre deux matériaux ou milieux d'indices différents, ce qui permet d'améliorer notablement le contraste d'affichage. D'autre part, dans le processus de fabrication collective par lots des cellules, on n'est plus obligé de déposer sélectivement les couches absorbantes noires selon le contour des cellules d'affichage, ce qui permet de simplifier la fabrication de ces cellules et d'en réduire le prix de revient.

Dans tout ce qui suit, les éléments identiques à ceux décrits précédemment en liaison avec la figure 1 seront désignés par les mêmes références numériques.

La figure 2 est une vue en coupe d'un dispositif d'affichage 1 selon une première forme d'exécution de la présente invention. On rappelle pour mémoire qu'un tel dispositif d'affichage 1 se compose d'un substrat avant 2 disposé du côté par où la lumière pénètre, et d'un substrat arrière 4 qui s'étend en regard du substrat avant 2 et parallèlement à ce dernier. Les deux substrats avant 2 et arrière 4 sont reliés par un cadre de scellement 6 qui délimite entre eux une cavité pour le confinement d'un film ou couche 8 de cristal liquide réflectif. La surface du substrat avant 2 tournée vers le substrat arrière 4 porte un premier groupe d'électrodes 10, et la surface du substrat arrière 4 tournée vers le substrat avant 2 porte un deuxième groupe d'électrodes 12.

Par rapport au mode de réalisation de l'art antérieur représenté à la figure 1, on constate que, conformément à la présente invention, la couche absorbante noire 14 n'est plus située sur la face inférieure du substrat arrière 4, mais à un niveau plus élevé que ce dernier dans l'ordre d'empilement des substrats 2 et 4, en considérant comme niveau le plus bas la face inférieure du substrat arrière 4 en regard de la face de ce même substrat 4 qui porte le second groupe d'électrodes 12. Plus précisément, la couche absorbante noire 14 est disposée entre le substrat arrière 4 et le second groupe d'électrodes 12. En adoptant, pour les réflexions de la lumière incidente au niveau des interfaces entre deux matériaux d'indices optiques différents, la même terminologie que celle employée à la figure 1, on constate que la réflexion R4 à l'interface entre le second groupe d'électrodes 12 et la face avant du substrat arrière 4 a disparu. Ceci est dû, bien sûr, au fait que la couche absorbante noire 14 a été déposée sur la surface avant du substrat arrière 4, et que le groupe d'électrodes 12 a été formé et structuré sur ladite couche absorbante noire 14. On peut démontrer très simplement par le calcul que l'élimination de la réflexion R4, entraînant une baisse de la réflectivité r du dispositif d'affichage 1 lorsque le cristal liquide 8 est commuté dans l'état où il est sensiblement transparent, provoque une augmentation du contraste d'affichage CR. D'autre part, comme la couche absorbante noire 14 n'est plus appliquée sur la face arrière de l'une des plaques commune à l'ensemble des cellules d'affichage lors de la fabrication par lots de celles-ci, on n'est plus obligé de déposer cette couche absorbante 14 de manière sélective en respectant le contour de chaque cellule, ce qui permet de simplifier considérablement le processus de fabrication et donc de réduire le prix de revient desdites cellules.

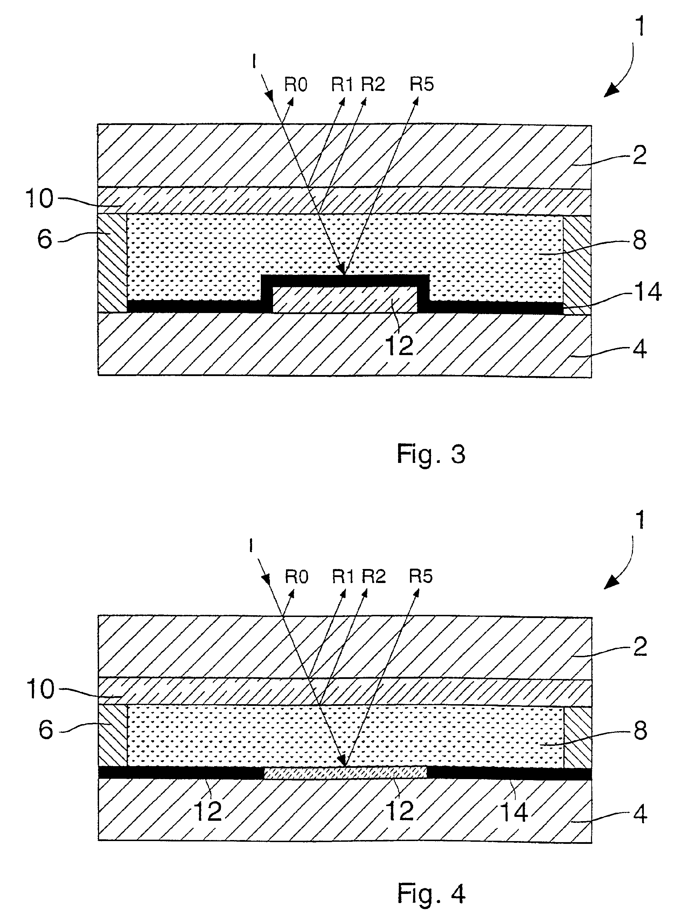

Sur la figure 3, la couche absorbante noire 14 est déposée sur le second groupe d'électrodes 12. Cette seconde variante de réalisation du dispositif d'affichage 1 selon l'invention permet d'éliminer les réflexions R3 et R4 et est donc encore plus favorable du point de vue du contraste d'affichage CR que le mode de réalisation représenté à la figure 2. En effet, la baisse de réflectivité r du dispositif d'affichage 1 lorsque le cristal liquide est dans l'état transparent est plus forte, ce qui implique une augmentation plus significative encore du contraste d'affichage CR.

La figure 4 est une vue en coupe dans un dispositif d'affichage 1 selon l'invention dans lequel le second groupe d'électrodes 12 porté par le substrat arrière 4 est réalisé en un matériau électriquement conducteur de couleur noire et est associé à une couche absorbante et isolante 14 également de couleur noire qui recouvre au moins les parties du substrat arrière non recouvertes par les électrodes 12.

Dans l'exemple représenté à la figure 4, on voit que la couche absorbante noire 14 recouvre uniquement les zones du substrat arrière 4 non recouvertes par les électrodes 12. La couche absorbante noire 14 est réalisée en un matériau électriquement non conducteur dont le coefficient de réflexion est proche ou égal à celui du matériau utilisé pour élaborer les électrodes noires 12.

Du point de vue de l'amélioration du contraste, ce mode de réalisation est aussi avantageux que celui représenté à la figure 3. Il permet, en effet, d'éliminer les réflexions R3 et R4 qui correspondent, respectivement, à la réflexion de la lumière incidente à l'interface entre la couche 8 de cristal liquide et le seconde groupe d'électrodes 12, et à la réflexion de la lumière incidente à l'interface entre ledit second groupe d'électrodes 12 et la face avant du substrat arrière 4. En conséquence, le coefficient de réflectivité r diminue, ce qui entraîne une augmentation du contraste d'affichage CR. Par contre, comparé au mode de réalisation de la figure 3, le mode de réalisation représenté à la figure 4 a comme avantage que l'on n'observe pas de chute de tension due à la présence de la couche noire 14 entre les électrodes 12 et la couche de cristal liquide 8. Cette chute de tension exige en effet une tension de commande des électrodes 10 et 12 plus élevée, ce qui entraîne évidemment une consommation électrique accrue, et nécessite que la couche absorbante noire 14 présente une épaisseur aussi constante que possible afin de pouvoir maintenir la tension de commande à une valeur uniforme pour l'ensemble des électrodes du dispositif d'affichage. Il faut donc avoir recours à des techniques d'impression qui permettent un contrôle rigoureux de l'épaisseur de la couche absorbante noire 14, ce qui a pour effet d'augmenter les coûts de fabrication du dispositif d'affichage. Par contre, dans le cas du dispositif d'affichage de la figure 4, l'épaisseur de la couche absorbante noire 12 joue un rôle moins important, ce qui permet d'utiliser des techniques d'impression plus simples et donc moins coûteuses.

On notera d'autre part que, comme le coefficient de réflexion du matériau employé pour réaliser la couche absorbante noire 14 est sensiblement égal à celui des électrodes noires 12, la quantité de lumière R5 réfléchie par lesdites électrodes 12 et par ladite couche absorbante 14 est identique. Par conséquent, dans les zones où le cristal liquide 8 est commuté dans un même état transparent ou réfléchissant, la lumière va être absorbée de manière quasi identique par la couche noire 14 et par les électrodes noires 12, et donc procurer un affichage contrasté et de couleur très homogène sur l'ensemble de la surface dudit dispositif d'affichage 1. Les électrodes ne pourront donc pas se détacher visuellement du reste de la surface d'affichage du dispositif selon l'invention, de sorte que ces électrodes seront totalement invisibles pour l'observateur.

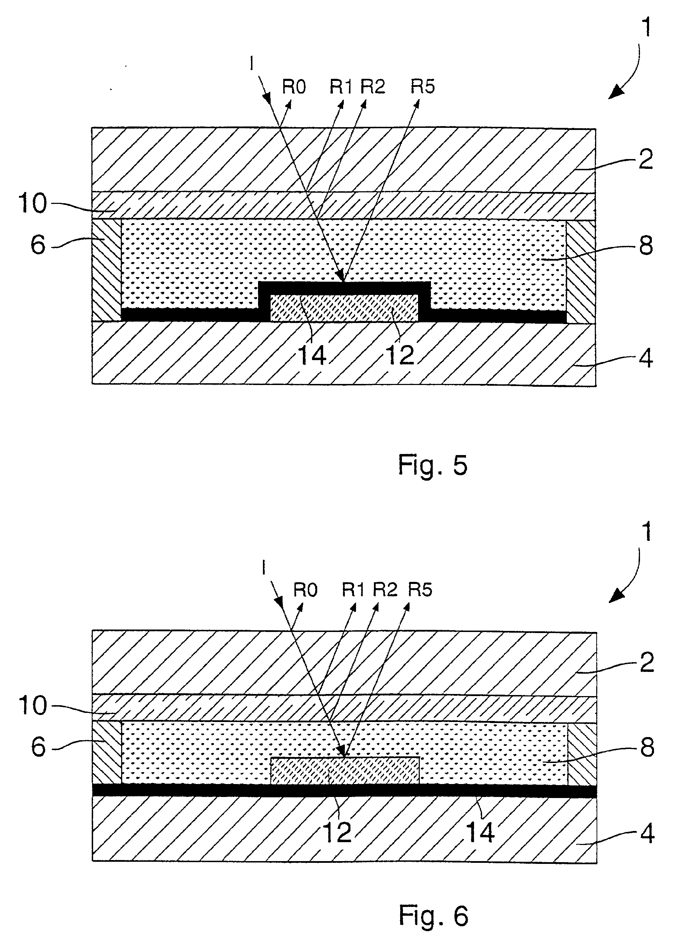

La figure 5 est une vue en coupe d'un dispositif d'affichage 1 selon l'invention dans lequel le second groupe d'électrodes 12 porté par le substrat arrière 4 est réalisé en un matériau électriquement conducteur de couleur noire et est recouvert par la couche absorbante noire 14. Du point de vue des pertes optiques, ce mode de réalisation est aussi avantageux que celui illustré à la figure 4 mais est plus simple à réaliser. En effet, au lieu que la couche absorbante noire 14 ne recouvre que les parties du substrat arrière 4 non recouvertes par les électrodes noires 12, elle recouvre la totalité de la surface dudit substrat arrière 4. Le dépôt de la couche absorbante noire 14 s'en trouve donc grandement simplifié et nécessite une précision moindre, ce qui permet de réaliser des économies substantielles en termes de temps de fabrication.

La figure 6 est une vue en coupe d'un dispositif d'affichage 1 selon l'invention dans lequel la couche absorbante noire 14 est disposée entre le substrat arrière 4 et le second groupe d'électrodes 12 réalisé en un matériau électriquement conducteur de couleur noire. Du point de vue des pertes optiques comme du point de vue de la fabrication, ce mode de réalisation est aussi avantageux que celui illustré à la figure 5. En effet, la couche absorbante noire 14 recouvre toute la surface du substrat arrière 4 et peut donc être déposée sans nécessiter un soin particulier. D'autre part, comme le coefficient de réflexion de la couche absorbante 14 est égal ou proche de celui des électrodes noires 12, la quantité de lumière réfléchie par ladite couche 14 et par lesdites électrodes 12 sera sensiblement la même, de sorte que l'on obtiendra un affichage très homogène sur l'ensemble de la surface du dispositif d'affichage 1.

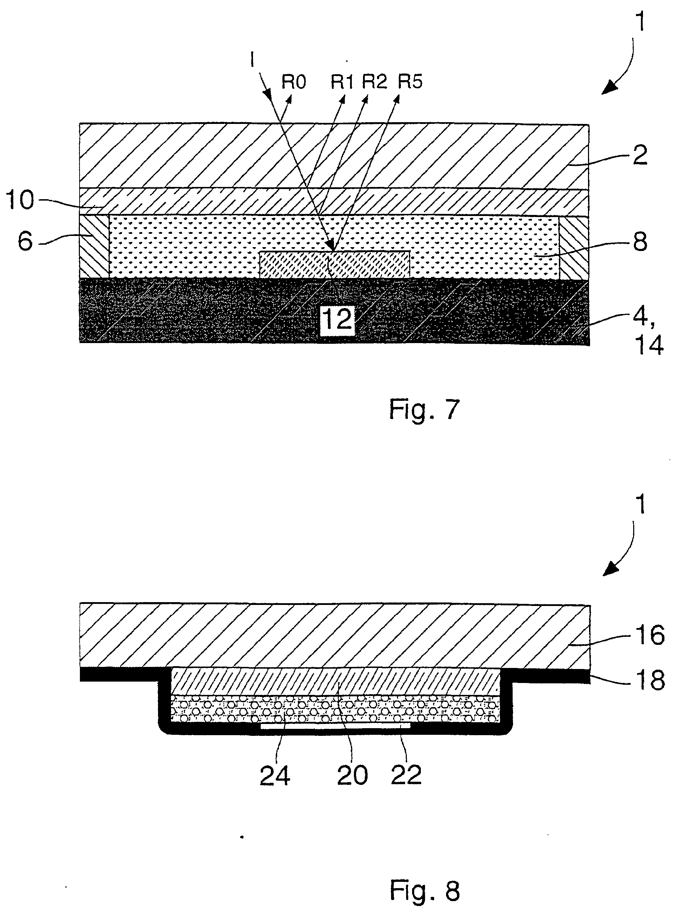

La figure 7 est une vue en coupe dans un dispositif d'affichage 1 selon l'invention dans lequel la couche absorbante noire 14 est faite d'une pièce avec le substrat arrière 4. A cet effet, le substrat arrière 4 est réalisé en verre ou en un matériau plastique teinté en noir dans la masse. Ce mode de réalisation du dispositif d'affichage 1 selon l'invention est aussi avantageux, du point de vue du rendement optique, que les modes de réalisation illustrés aux figures 5 et 6. Il présente cependant encore un avantage supplémentaire dans la mesure où, le substrat arrière 4 jouant à la fois le rôle de support d'électrodes et celui de couche absorbante noire, l'étape de dépôt de ladite couche absorbante est supprimée, ce qui permet de réaliser un gain de temps de fabrication et donc de réduire le prix de revient du dispositif d'affichage 1.

Selon un deuxième aspect, la présente invention concerne (voir figure 8) un dispositif d'affichage 1 à cristaux liquides comprenant un substrat transparent 16 disposé sur un côté avant, c'est-à-dire du côté recevant une lumière incidente, et une couche 18 disposée sur un côté arrière, de sorte que cette couche 18 s'étend en regard du substrat 16 parallèlement à ce dernier. La couche 18 joue le rôle tenu par le substrat arrière 4 décrit précédemment. Le substrat avant 16 et la couche 18 portent sur leurs faces en regard un premier groupe d'électrodes transparentes 20 et un deuxième groupe d'électrodes 22 respectivement. Les électrodes 20 et 22 peuvent être disposées, par exemple, sous forme de bandes perpendiculaires entre elles. Un film 24 formé par une pluralité de capsules de cristal liquide ou par un cristal liquide dispersé dans un polymère est disposé entre le substrat avant 16 et la couche 18.

Conformément à une caractéristique de l'invention, la couche 18 est une couche absorbante de couleur noire réalisée en un matériau électriquement non conducteur, tandis que le second groupe d'électrodes 22 est réalisé en un matériau électriquement conducteur également de couleur noire. Le coefficient de réflexion du matériau utilisé pour élaborer la couche absorbante noire 18 est proche ou égal à celui du matériau utilisé pour structurer les électrodes 22.

Grâce à ces caractéristiques, on élimine le substrat arrière 4 qui est classiquement réalisé en un matériau rigide tel que du verre ou en un matériau semi-rigide tel qu'une matière plastique, et on le remplace par la couche absorbante noire 26 qui peut être déposée par toutes sortes de méthodes telles que l'impression, l'évaporation ou autres directement sur les électrodes noires 22. On réalise donc des gains de productivité qui ont un impact favorable sur le prix de revient du produit fini.

Conformément à l'invention, le matériau électriquement conducteur de couleur noire utilisé pour réaliser le second groupe d'électrodes peut être, au choix, une colle ou un vernis noir chargé de particules conductrices telles que des particules de carbone. En ce qui concerne la colle d'aspect noir, celle-ci peut comprendre une résine et un durcisseur, l'un de ces deux composants étant chargé avec les particules conductrices. On pourra avantageusement utiliser le produit commercialisé sous le nom Carbon Light Lack SD 2841 par la société Lack Verke GmbH.

En ce qui concerne le dépôt de la couche absorbante noire, on peut avoir recours à l'impression sérigraphique, à l'impression tampographique, à l'impression flexographique ou encore à un dépôt par évaporation de ladite couche noire. Cette couche absorbante peut être réalisée, par exemple, en une laque isolante de couleur noire telle que celle commercialisée sous le nom Heatsinkpaste HSP 2741 par la société Lack Verke GmbH.

Comme on l'aura compris de ce qui précède, la présente invention met en oeuvre des cristaux liquides intrinsèquement réflectifs, c'est-à-dire réfléchissant la lumière sans l'aide de réflecteurs dans un premier état de commutation, et étant sensiblement transparents à la lumière dans un deuxième état de commutation. Parmi ces cristaux liquides, on peut citer, bien entendu, les cristaux liquides à texture cholestérique, mais également les structures cristal liquide/polymère formées par holographie ou encore certains cristaux liquides dispersés dans un polymère, mieux connus sous leur dénomination anglo-saxonne "Polymer Dispersed Liquid Crystal" ou "PDLC".

Il va de soi que l'invention n'est pas limitée aux modes de réalisation qui viennent d'être décrits, et que des modifications et des variantes peuvent être envisagées sans sortir du cadre de la présente invention.

**Revendications**

**1.** Dispositif d'affichage (1) à cristaux liquides comprenant un substrat (2) disposé sur un côté avant, c'est-à-dire disposé du côté recevant une lumière incidente, et un deuxième substrat (4) disposé sur un côté arrière, de sorte que ce deuxième substrat (4) s'étend en regard du substrat avant (2) parallèlement à ce dernier, les premier et second substrats (2, 4) étant reliés par l'intermédiaire d'un cadre de scellement (6) afin de délimiter entre eux une cavité pour le confinement des cristaux liquides (8) et comportant sur leurs faces en regard un premier et un second groupes d'électrodes (10, 12) respectivement, le dispositif d'affichage (1) étant connecté à un circuit de commande des électrodes (10, 12), ce circuit pouvant fournir des tensions de commande appropriées à des électrodes sélectionnées pour modifier les conditions optiques du cristal liquide (8) au point de croisement des électrodes considérées, c'est-à-dire commuter le cristal liquide (8) dans un état où il est réfléchissant ou dans un état où il est transparent, ledit dispositif d'affichage (1) comprenant en outre une couche absorbante noire (14) réalisée dans un matériau électriquement non conducteur, **caractérisé en ce que** la couche absorbante (14) est disposée au même niveau ou à un niveau plus élevé dans l'ordre d'empilement des substrats (2, 4) que la face du substrat arrière (2) qui porte le second groupe d'électrodes.

2. Dispositif d'affichage selon la revendication 1, **caractérisé en ce que** la couche absorbante noire (14) est disposée entre le substrat arrière (4) et le second groupe d'électrodes (12).

3. Dispositif d'affichage selon la revendication 1, **caractérisé en ce que** la couche absorbante noire (14) est déposée sur le second groupe d'électrodes (12).

4. Dispositif d'affichage selon la revendication 1, **caractérisé en ce que** le second groupe d'électrodes (12) est réalisé en un matériau électriquement conducteur de couleur noire, et est associé à une couche absorbante (14) également de couleur noire réalisée en un matériau électriquement non conducteur dont le coefficient de réflexion est proche ou égal à celui du matériau utilisé pour élaborer les électrodes (12), cette couche (14) recouvrant au moins les parties non recouvertes par les électrodes (12), de façon que, dans les zones où le cristal liquide (8) est commuté dans un même état transparent ou réfléchissant, la lumière puisse être absorbée indifféremment par la couche noire (14) ou par les électrodes (12) et procurer un affichage contrasté de couleur homogène sur l'ensemble de la surface dudit dispositif d'affichage (1).

5. Dispositif d'affichage selon la revendication 4, **caractérisé en ce que** le second groupe d'électrodes (12) est porté par le substrat arrière (4), les parties dudit substrat arrière (4) non recouvertes par lesdites électrodes (12) étant recouvertes par la couche absorbante noire (14).

6. Dispositif d'affichage selon la revendication 4, **caractérisé en ce que** le second groupe d'électrodes (12) est porté par le substrat arrière (4), la couche absorbante noire (14) étant déposée sur ledit second groupe d'électrodes (12).

7. Dispositif d'affichage selon la revendication 4, **caractérisé en ce que** la couche absorbante noire (14) est disposée entre le substrat arrière (4) et le second groupe d'électrodes (12).

8. Dispositif d'affichage selon la revendication 4, **caractérisé en ce que** la couche absorbante noire (14) est faite d'une pièce avec le substrat arrière (4).

9. Dispositif d'affichage selon la revendication 8, **caractérisé en ce que** le substrat arrière (4) est réalisé en verre ou en un matériau plastique teinté en noir dans la masse.

10. Dispositif d'affichage à cristaux liquides comprenant un substrat (16) disposé sur un côté avant, c'est-à-dire du côté recevant une lumière incidente, et une couche (18) disposée sur un côté arrière, de sorte que cette couche (18) s'étend en regard du substrat avant (16) parallèlement à ce dernier, le substrat avant (16) et la couche (18) portant sur leurs faces en regard un premier et un second groupe d'électrodes (20, 22) respectivement, un film (24) formé par une pluralité de capsules de cristal liquide ou par un cristal liquide dispersé dans un polymère étant disposé entre ledit substrat avant et ladite couche, **caractérisé en ce que** la couche (18) est une couche absorbante de couleur noire réalisée en un matériau électriquement non conducteur, et **en ce que** le second groupe d'électrodes (22) est réalisé en un matériau électriquement conducteur également de couleur noire, le coefficient de réflexion du matériau utilisé pour élaborer la couche absorbante noire (18) étant proche ou égal à celui du matériau utilisé pour élaborer les électrodes (22).

11. Dispositif d'affichage selon l'une quelconque des revendications 4 à 10, **caractérisé en ce que** le matériau électriquement conducteur est un vernis noir chargé de particules conductrices.

12. Dispositif d'affichage selon l'une quelconque des revendications 4 à 10, **caractérisé en ce que** le matériau électriquement conducteur est une colle noire chargée de particules conductrices.

13. Dispositif d'affichage selon la revendication 12, **caractérisé en ce que** la colle conductrice noire comprend une résine et un durcisseur, l'un de ces deux composants étant chargé des particules conductrices.

**14.** Dispositif d'affichage selon l'une quelconque des revendications 11 à 13, **caractérisé en ce que** les particules conductrices sont des particules de carbone.

**15.** Dispositif d'affichage selon l'une quelconque des revendications 1 à 14, **caractérisé en ce que** la couche absorbante (14, 18) est réalisée en une laque isolante de couleur noire.

**16.** Dispositif d'affichage selon l'une quelconque des revendications 1 à 15, **caractérisé en ce que** la couche absorbante noire (14, 18) est déposée par impression sérigraphique, impression tampographique, impression flexographique ou par évaporation.

**17.** Dispositif d'affichage selon l'une quelconque des revendications 1 à 16, **caractérisé en ce que** le cristal liquide (8) réfléchissant est choisi dans le groupe formé par les cristaux liquides à texture cholestérique, les structures cristal liquide/polymère formées par holographie, et par les cristaux liquides dispersés dans un polymère.

Fig. 1
(ART ANTERIEUR)

1

RX

I

R0 R1 R2 R3 R4 R5

2

10

6

8

12

14

Fig. 2

1

I

R0 R1 R2 R3 R5

2

10

6

8

14

12

4

1

I R0 R1 R2 R5

10

6

8

14

12

4

2

**Fig. 3**

1

I

R0 R1 R2 R5

10

6

8

12 12 14

4

2

**Fig. 4**

Fig. 5

Fig. 6

1

I R0 R1 R2 R5

2

10

6

8

12

4,
14

Fig. 7

1

16

18

24 20 22

Fig. 8

# EP 1 209 512 A1

**Office européen des brevets**

## RAPPORT DE RECHERCHE EUROPEENNE

Numéro de la demande

EP 00 20 4224

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 6 124 908 A (HATANO TAKUJI ET AL) 26 septembre 2000 (2000-09-26) * colonne 10, ligne 29 - colonne 11, ligne 43 * | 1,15-17 | G02F1/1335 G02F1/1343 G02F1/137 G02F1/1334 |
| Y | | 2,4,8 | |
| Y | WO 95 07494 A (PHILIPS ELECTRONICS NV ;PHILIPS NORDEN AB (SE)) 16 mars 1995 (1995-03-16) | 4,8 | |
| A | * page 3, ligne 11 - page 4, ligne 25 * | 10 | |
| Y | PATENT ABSTRACTS OF JAPAN vol. 011, no. 223 (P-597), 21 juillet 1987 (1987-07-21) & JP 62 040430 A (SEIKO EPSON CORP), 21 février 1987 (1987-02-21) * abrégé * | 2 | |
| X | US 3 734 597 A (CHURCHILL D ET AL) 22 mai 1973 (1973-05-22) * colonne 10, ligne 22 - ligne 41; figure 2 * * colonne 8, ligne 55 - colonne 9, ligne 15 * | 1-3 | **DOMAINES TECHNIQUES RECHERCHES (Int.Cl.7)** G02F |
| A | PATENT ABSTRACTS OF JAPAN vol. 017, no. 539 (P-1621), 28 septembre 1993 (1993-09-28) & JP 05 150227 A (KYOCERA CORP), 18 juin 1993 (1993-06-18) * abrégé * | 3 | |
| A | US 6 005 651 A (MOCHIZUKI HIDEAKI ET AL) 21 décembre 1999 (1999-12-21) * colonne 6, ligne 47 - colonne 7, ligne 46 * | 1,5 | |

Le présent rapport a été établi pour toutes les revendications

| Lieu de la recherche | Date d'achèvement de la recherche | Examinateur |
|---|---|---|
| LA HAYE | 7 mai 2001 | Diot, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

14

**ANNEXE AU RAPPORT DE RECHERCHE EUROPEENNE
RELATIF A LA DEMANDE DE BREVET EUROPEEN NO.**

EP 00 20 4224

La présente annexe indique les membres de la famille de brevets relatifs aux documents brevets cités dans le rapport de recherche européenne visé ci-dessus.
Lesdits membres sont contenus au fichier informatique de l'Office européen des brevets à la date du
Les renseignements fournis sont donnés à titre indicatif et n'engagent pas la responsabilité de l'Office européen des brevets.

07-05-2001

| Document brevet cité au rapport de recherche | | Date de publication | Membre(s) de la famille de brevet(s) | | Date de publication |
|---|---|---|---|---|---|
| US 6124908 | A | 26-09-2000 | JP | 9329778 A | 22-12-1997 |
| | | | JP | 10010501 A | 16-01-1998 |
| | | | JP | 10010498 A | 16-01-1998 |
| WO 9507494 | A | 16-03-1995 | BE | 1007483 A | 11-07-1995 |
| JP 62040430 | A | 21-02-1987 | AUCUN | | |
| US 3734597 | A | 22-05-1973 | US | 3816786 A | 11-06-1974 |
| | | | CH | 523564 A | 31-05-1972 |
| | | | DE | 1908118 A | 02-10-1969 |
| | | | FR | 1601599 A | 31-08-1970 |
| | | | GB | 1201230 A | 05-08-1970 |
| | | | NL | 6902850 A,C | 26-08-1969 |
| | | | SE | 338386 B | 06-09-1971 |
| | | | US | 3600060 A | 17-08-1971 |
| JP 05150227 | A | 18-06-1993 | AUCUN | | |
| US 6005651 | A | 21-12-1999 | JP | 3104479 B | 30-10-2000 |
| | | | JP | 7005454 A | 10-01-1995 |
| | | | JP | 6214252 A | 05-08-1994 |
| | | | US | 5737050 A | 07-04-1998 |

EPO FORM P0460

Pour tout renseignement concernant cette annexe : voir Journal Officiel de l'Office européen des brevets, No.12/82